# FASCICULE DE BREVET EUROPEEN

(11) **EP 2 734 443 B1**
(45) Date de publication et mention de la délivrance du brevet: **30.08.2017**
(21) Numéro de dépôt: 12744071.7
(22) Date de dépôt: 10.07.2012
(51) Int. Cl.: B64C 11/38

(54) **DISPOSITIF D'ALIMENTATION EN FLUIDE D'UN VERIN HYDRAULIQUE POUR LA COMMANDE DE L'ORIENTATION DES PALES DE SOUFFLANTE D'UN TURBOPROPULSEUR A DOUBLE HELICE**
VERSORGUNGSSYSTEM FÜR HYDRAULISCH VERSTELLBARE PROPELLER EINES TURBOPROPTRIEBWERKS MIT ZWEI PROPELLER
HYDRAULIC SUPPLY SYSTEM FOR A PITCH CHANGING ACTUATOR IN A TURBOFAN ENGINE DRIVING TWO PROPELLERS

(30) Priorité: 21.07.2011 FR 1156625
(43) Date de publication de la demande: 28.05.2014
(73) Titulaire: SNECMA, 75015 Paris (FR)
(72) Inventeur: GALLET, François, 77550 Moissy-Cramayel Cedex (FR); ROUESNE, Ivan, Guy, 77550 Moissy-Cramayel Cedex (FR)
(74) Mandataire: Boura, Olivier
(86) Numéro de dépôt international: PCT/FR2012/051624
(87) Numéro de publication internationale: WO 2013/011225

(56) Documents cités:
- GB-A- 2 461 784
- US-A- 2 850 103

## Description

### Arrière-plan de l'invention

La présente invention se rapporte au domaine général des turbopropulseurs munis de deux hélices contrarotatives entraînées en rotation au moyen d'une turbine simple.

Elle vise plus précisément l'alimentation en fluide d'un vérin hydraulique pour la commande de l'orientation des pales de soufflante d'un turbopropulseur à double hélice.

De façon connue, un turbopropulseur d'avion à double hélice comprend deux ensembles contrarotatifs de pales de soufflante non carénées et à orientation réglable. Dans certaines architectures de turbopropulseur à double hélice, ces ensembles de pales de soufflante sont entraînés en rotation par une turbine de puissance à deux rotors contrarotatifs. Dans d'autres architectures plus particulièrement concernées par la présente invention, les ensembles de pales de soufflante sont entraînés par un même et unique rotor de la turbine de puissance, par l'intermédiaire d'un train épicycloïdal formant réducteur contrarotatif. On pourra par exemple se référer au document FR 2,942,203 qui décrit un exemple de réalisation d'une telle architecture.

Les hélices contrarotatives d'un tel turbopropulseur peuvent être entraînées en rotation directement ou indirectement par l'intermédiaire du train épicycloïdal. Généralement, ce train épicycloïdal comporte une entrée qui est reliée vers l'amont à un arbre de rotor de la turbine de puissance pour être entraîné par celle-ci, et deux sorties qui sont reliées chacune vers l'aval à un arbre de puissance pour entraîner en rotation les deux ensembles de pales de soufflante du turbopropulseur de façon contrarotative.

Par ailleurs, l'orientation des pales de soufflante de chaque ensemble (on parle également de réglage de pas) constitue l'un des paramètres permettant de gérer la poussée du turbopropulseur et la vitesse de rotation des hélices. L'une des solutions connues pour commander l'orientation des pales de soufflante en cours de vol est d'utiliser, pour chaque ensemble de pales de soufflante, un anneau de synchronisation couplé à chaque pale. Un vérin hydraulique positionné au centre du turbopropulseur et solidaire en rotation du rotor de turbine permet d'entraîner en rotation l'anneau de synchronisation autour de l'axe longitudinal du turbopropulseur (par l'intermédiaire d'un système de bras de liaison), et ainsi de réaliser un même calage pour toutes les pales du même ensemble. On pourra se référer par exemple à la demande de brevet FR 11 56443 déposée le 13 juillet 2011 (non publiée à ce jour) par la Demanderesse qui décrit un exemple de mise en oeuvre d'un tel mécanisme.

Avec ce type de mécanisme se pose le problème de l'alimentation en fluide des chambres des vérins. En particulier, l'arrivée du fluide est réalisée par des tubes qui sont fixées sur des parties fixes du turbopropulseur, tandis que les vérins, et donc leurs chambres, sont tournant car entraînés en rotation par le rotor de turbine. Il est ainsi nécessaire de faire passer le fluide d'un repère fixe à un repère tournant. De plus, le transfert du fluide des tubes d'arrivée de fluide aux chambres des vérins de commande doit se faire dans un encombrement le plus réduit possible afin de ne pas augmenter la longueur du moteur.

Le document US 2,850,103 décrit une commande hydraulique d'orientation des pales d'hélice dont l'alimentation en fluide hydraulique est réalisée par des rainures annulaires débouchant dans des conduits axiaux agencés dans l'axe de rotation.

### Objet et résumé de l'invention

La présente invention a donc pour but principal de pallier de tels inconvénients en proposant un dispositif d'alimentation en fluide des vérins hydrauliques qui s'intègre parfaitement dans une architecture de turbopropulseur décrite ci-avant.

Conformément à l'invention, ce but est atteint grâce à un turbopropulseur à double hélice selon la revendication 1.

Le dispositif selon l'invention permet ainsi de transférer le fluide depuis un repère fixe (i.e. les tubes d'arrivée de fluide) vers un repère tournant (i.e. les chambres des vérins de commande de l'orientation des pales de soufflante). Par ailleurs, les tubes d'arrivée de fluide peuvent passer par le carter d'échappement du turbopropulseur qui est ventilé pour constituer un environnement thermique froid favorable à la présence de fluide pour le fonctionnement de vérins hydrauliques. En outre, l'intégration d'un tel dispositif dans un turbopropulseur à double hélice ne nécessite pas d'augmenter la longueur du moteur et peut être réalisée dans une enceinte hydraulique du turbopropulseur avec les avantages que cela comporte en cas de fuite.

De préférence, le dispositif comprend en outre un répartiteur de fluide comportant une partie cylindrique intercalée radialement entre les parties cylindriques respectives du distributeur de fluide et du support d'arrivée de fluide en leur étant coaxiale. Dans ce cas, la partie cylindrique du répartiteur de fluide peut comprendre, pour chaque gorge de circulation de fluide du distributeur, une pluralité d'orifices régulièrement répartis sur une surface extérieure.

La partie cylindrique du distributeur de fluide se prolonge à l'une de ses extrémités longitudinales par une partie radiale munie d'au moins deux conduits pour le passage de fluide, chaque conduit de passage de fluide s'ouvrant dans un canal d'écoulement de fluide de la baignoire et débouchant vers une chambre de vérin de commande. La partie cylindrique du support d'arrivée de fluide peut se prolonger à l'une de ses extrémités longitudinales par une partie radiale destinée à être fixée sur une partie fixe du turbopropulseur.

Des paliers à roulement sont avantageusement disposés entre le distributeur de fluide et le support d'arrivée de fluide.

Les gorges de circulation de fluide du distributeur de fluide peuvent être délimitées longitudinalement les unes des autres par au moins trois joints annulaires disposés sur la surface extérieure de la partie cylindrique du distributeur et faisant saillies radialement vers l'extérieur de celle-ci.

L'invention concerne donc un turbopropulseur à double hélice comprenant un premier et un second ensembles de pales de soufflante à orientation réglable entraînés en rotation par un rotor d'une turbine de puissance, deux vérins hydrauliques pour la commande de l'orientation des pales de soufflante centrés sur un axe longitudinal du turbopropulseur, et un dispositif d'alimentation en fluide des vérins. Le rotor de la turbine de puissance peut entraîner en rotation les ensembles de pales de soufflante par l'intermédiaire d'un train épicycloïdal formant réducteur.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en demi-coupe longitudinale d'un turbopropulseur à double hélice auquel s'applique l'invention ;
- la figure 2 est une vue agrandie de la figure 1 montrant un dispositif d'alimentation en fluide conforme à l'invention ; et
- la figure 3 est une vue en perspective et en éclaté du dispositif d'alimentation en fluide de la figure 2.

### Description détaillée de l'invention

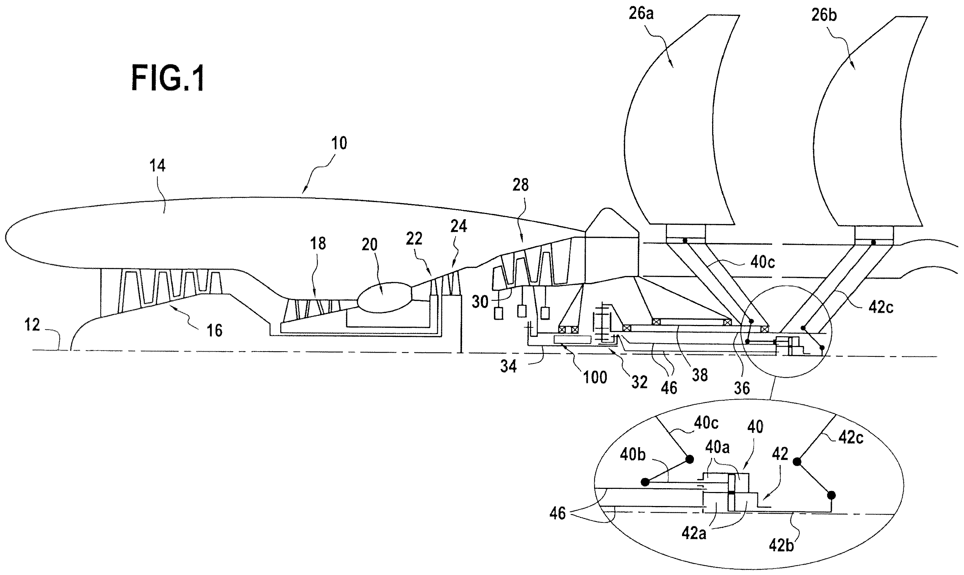

La figure 1 représente de façon très schématique un exemple de réalisation d'un turbopropulseur d'avion du type à double hélice auquel s'applique l'invention.

Un tel turbopropulseur 10 est connu et ne sera donc pas décrit en détails. Il comprend notamment un axe longitudinal 12 et une nacelle annulaire 14 disposée coaxialement autour de l'axe longitudinal. Le turbopropulseur 10 comprend en outre, d'amont en aval, un compresseur basse-pression 16, un compresseur haute-pression 18, une chambre de combustion 20, une turbine haute-pression 22 et une turbine de pression intermédiaire 24.

En aval de la turbine de pression intermédiaire 24 se trouve un système d'hélices contrarotatives, à savoir un ensemble amont (ou avant) 26a et un ensemble aval (ou arrière) 26b de pales de soufflante à orientation réglable.

Ce système d'hélices contrarotatives est entraîné en rotation au moyen d'une turbine basse-pression 28 disposée en aval de la turbine de pression intermédiaire 24. Cette turbine basse-pression comporte notamment un rotor 30 qui entraîne en rotation les deux ensembles 26a, 26b de pales par l'intermédiaire d'un train épicycloïdal 32 formant réducteur.

Le train épicycloïdal se compose de plusieurs satellites et porte-satellites (non représentés) et présente une entrée reliée en amont à un arbre 34 du rotor 30 de la turbine basse-pression centré sur l'axe longitudinal 12 du turbopropulseur, et deux sorties reliées chacune en aval à un arbre de puissance.

Plus précisément, l'une des sorties du train épicycloïdal est reliée en aval à un arbre interne de puissance 36 disposé autour de l'axe longitudinal 12 du turbopropulseur et destiné à entraîner en rotation l'ensemble aval 26b de pales.

Quant à l'autre sortie du train épicycloïdal, elle est reliée en aval à un arbre externe de puissance 38 disposé autour de l'arbre interne 36 en lui étant concentrique et destiné à entraîner en rotation l'ensemble amont 26a de pales.

Par ailleurs, il est prévu un système pour la commande de l'orientation des pales de soufflante de chacun des ensembles amont et aval. De façon connue, ces systèmes permettent de régler l'orientation des pales de soufflante au cours du vol afin de gérer la poussée du turbopropulseur et de modifier la vitesse de rotation des hélices.

Dans l'exemple de réalisation de la figure 1, chacun des systèmes comprend notamment un vérin hydraulique, respectivement 40 pour la commande de l'orientation des pales de l'ensemble amont et 42 pour la celle des pales de l'ensemble aval, qui est centré sur l'axe longitudinal 12 du turbopropulseur et solidaire en rotation d'un arbre du rotor entraînant en rotation l'ensemble aval.

Chacun de ces vérins 40, 42 comprend deux chambres, respectivement 40a et 42a, disposées de façon concentrique autour de l'axe longitudinal 12 du turbopropulseur et alimentées en fluide hydraulique (huile) à partir d'un dispositif selon l'invention décrit ultérieurement.

Une tige rigide 40b, 42b reliée au piston des vérins 40, 42 permet, lors de son déplacement, d'ajuster l'orientation des pales des ensembles amont et aval par l'intermédiaire de biellettes de commande 40c, 42c et d'anneaux de synchronisation (non représentés sur les figures). Un exemple d'un tel système est décrit dans la demande de brevet FR 11 56443 déposée par la Demanderesse le 13 juillet (non publiée ce jour) sous le titre « Dispositif de commande de l'orientation des pales de soufflante d'un turbopropulseur » à laquelle on pourra se référer.

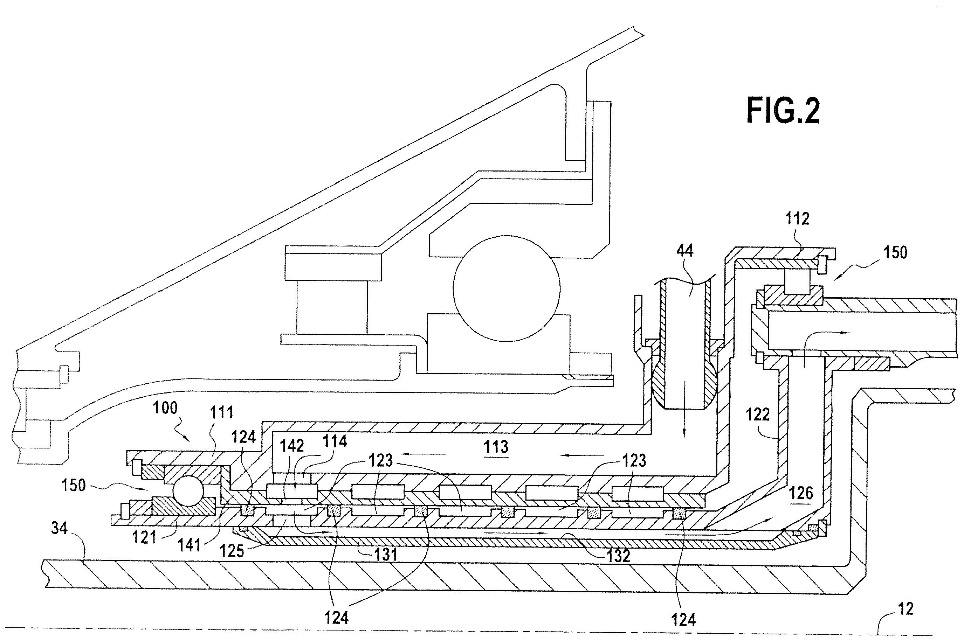

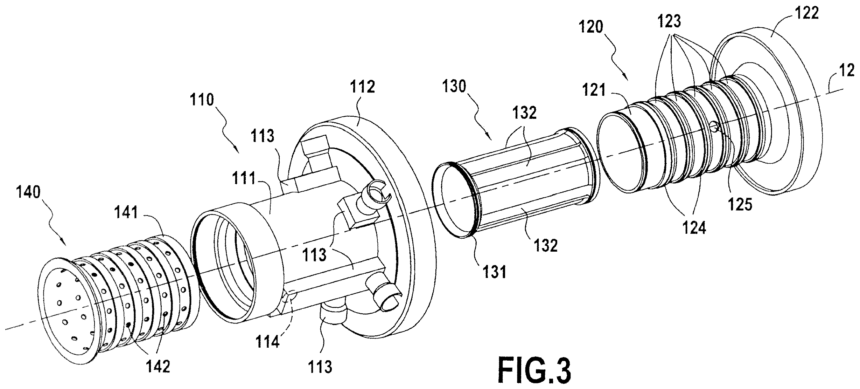

Les deux chambres des vérins 40, 42 sont alimentées en fluide hydraulique à l'aide d'un dispositif d'alimentation 100 conforme à l'invention et représenté sur les figures 2 et 3.

Ce dispositif d'alimentation 100 comprend notamment (depuis l'extérieur vers l'intérieur) un support d'arrivée de fluide 110, un distributeur de fluide 120, et une baignoire 130. Ces éléments sont de forme annulaire et sont disposés autour de l'arbre 34 du rotor de la turbine basse-pression (en lui étant coaxial) et en amont du train épicycloïdal.

De façon plus précise, le support d'arrivée de fluide 110 comprend une partie cylindrique 111 centrée sur l'axe longitudinal 12 du turbopropulseur et se prolongeant à son extrémité aval par une partie radiale d'attache 112 qui est destinée à être fixée sur une partie fixe du turbopropulseur.

Au niveau de sa surface extérieure, la partie cylindrique 111 est munie de cinq passages distincts de fluide 113 s'ouvrant chacun radialement vers un tube d'arrivée de fluide 44 statique. Ces passages de fluide 113 sont régulièrement espacés autour de l'axe longitudinal 12 du turbopropulseur et s'étendent longitudinalement depuis la partie radiale 112 du support d'arrivée de fluide. Ils débouchent à l'intérieur de celui-ci par l'intermédiaire d'orifices de sortie 114 espacés longitudinalement les uns des autres.

Le distributeur de fluide 120 comprend également une partie cylindrique 121 centrée sur l'axe longitudinal 12 du turbopropulseur et se prolongeant à son extrémité aval par une partie radiale d'attache 122 solidaire en rotation de l'arbre 34 d'un rotor du turbopropulseur, par exemple celui de la turbine basse-pression.

La partie cylindrique 121 du distributeur de fluide est plus précisément disposée à l'intérieur de la partie cylindrique du support d'arrivée de fluide en lui étant coaxiale. Au niveau de sa surface extérieure, elle est munie de cinq gorges de circulation de fluide 123 de formes annulaires qui sont centrées sur l'axe longitudinal 12 du turbopropulseur, espacées longitudinalement les unes des autres et délimitées entre elles par six joints annulaires 124 faisant saillies radialement vers l'extérieur. Ces gorges de circulation de fluide présentent chacune au moins un orifice de sortie 125 débouchant radialement à l'intérieur de la partie cylindrique du distributeur.

Quant à la partie d'attache 122 du distributeur de fluide, elle est munie de cinq conduits 126 pour le passage de fluide, quatre de ces conduits débouchant en aval vers les quatre chambres des vérins 40, 42 pour les alimenter en fluide hydraulique, le dernier conduit débouchant vers une commande de sécurité du système de commande de l'orientation des pales de soufflante interdisant la mise en inversion de poussée de ces pales au cours du vol (non représentée sur les figures).

Les parties cylindriques respectives du distributeur de fluide et du support d'arrivée de fluide sont disposées l'une par rapport à l'autre de telle sorte que : les joints 124 du distributeur viennent réaliser une étanchéité au fluide avec la surface intérieure de la partie cylindrique 111 du support de façon à rendre les gorges de circulation de fluide 123 du distributeur indépendantes les unes des autres ; et les orifices de sortie 114 du support débouchent chacun dans l'une des gorges de circulation de fluide 123 pour les alimenter en fluide.

La baignoire 130 du dispositif d'alimentation selon l'invention est solidaire en rotation du distributeur de fluide sur lequel elle est fixée. Elle comporte une partie cylindrique 131 qui est disposée à l'intérieur de la partie cylindrique du distributeur 121 en lui étant coaxiale. Au niveau de sa surface extérieure, cette partie cylindrique 131 comprend cinq canaux d'écoulement de fluide 132 s'étendant longitudinalement entre ses deux extrémités.

Les parties cylindriques respectives du distributeur de fluide et de la baignoire sont disposées angulairement l'une par rapport à l'autre de telle sorte que : chacun des canaux d'écoulement de fluide 132 soit alimenté en fluide par l'un des orifices de sortie 125 du distributeur de fluide ; et chaque conduit de passage de fluide 126 du distributeur s'ouvre à l'extrémité aval d'un canal d'écoulement de fluide 132 de la baignoire.

Le fonctionnement du dispositif selon l'invention découle de manière évidente de ce qui précède. Les tubes d'arrivée de fluide 44 qui sont solidaires du carter du turbopropulseur injectent du fluide hydraulique dans chacun des cinq passages de fluide 113 du support (également fixe). Le fluide s'échappe de ces passages de fluide pour venir alimenter chacune des gorges de circulation de fluide 123 du distributeur, ce dernier étant entraîné en rotation autour de l'axe longitudinal du turbopropulseur par l'arbre 34 du rotor de la turbine basse-pression. Le passage d'un repère statique vers un repère dynamique du fluide est ainsi réalisé. Le fluide s'écoule ensuite à l'intérieur du distributeur pour alimenter chacun des canaux d'écoulement de fluide 132 de la baignoire. A l'extrémité aval de celle-ci, le fluide emprunte alors un conduit de passage de fluide 126 du distributeur. Ces conduits traversent les porte-satellite du train épicycloïdal (qui sont percés à cet effet) et sont connectés en aval de celui-ci à des tubes 46 reliés plus loin en aval aux chambres des vérins des systèmes de commande de l'orientation des pales de soufflante (seuls deux tubes 46 sont représentés schématiquement sur la figure 1).

Dans l'exemple décrit ici et illustré sur les figures, il a été envisagé le cas d'une alimentation en fluide hydraulique de cinq organes hydrauliques différents (à savoir les chambres des deux vérins et la commande de sécurité). Bien entendu, l'invention s'applique plus généralement à l'alimentation de n organes hydrauliques (n ≥ 2) auquel cas il sera prévu n passages de fluide 113, n gorges de circulation de fluide 123, n conduits 126, n tubes d'arrivée de fluide 44, et n+1 joints annulaires 124.

Selon une caractéristique avantageuse de l'invention, un répartiteur de fluide 140 est intercalé radialement entre le support d'arrivée de fluide 110 et le distributeur de fluide 120.

Plus précisément, ce répartiteur de fluide comprend une partie cylindrique 141 qui est montée entre les parties cylindriques 111, 121 respectives du distributeur et du support en leur étant coaxiale. Cette partie cylindrique 141 comprend, pour chaque gorge de circulation de fluide 123 du distributeur, une pluralité d'orifices de passage 142 débouchant à l'intérieur du répartiteur. Ces orifices de passage sont régulièrement espacés autour de l'axe longitudinal 12 du distributeur de façon à homogénéiser la quantité de fluide débouchant dans les gorges de circulation de fluide 123.

Selon une autre disposition avantageuse de l'invention représentée sur la figure 2, des paliers à roulement 150 sont disposés entre le distributeur de fluide 120 et le support d'arrivée de fluide 110 (au niveau de leurs extrémités amont et aval). Ces paliers à roulement permettent de supporter en rotation le distributeur de fluide par rapport au support d'arrivée de fluide.

## Revendications

1. Turbopropulseur à double hélice, comprenant un premier et un second ensembles (26a, 26b) de pales de soufflante à orientation réglable entraînés en rotation par un rotor d'une turbine de puissance, deux vérins hydrauliques (40, 42) pour la commande de l'orientation des pales de soufflante centrés sur un axe longitudinal du turbopropulseur, et un dispositif d'alimentation en fluide (100) des vérins, **caractérisé en ce que** ledit dispositif d'alimentation en fluide comprend :
un distributeur de fluide (120) solidaire en rotation d'un rotor du turbopropulseur et comportant une partie cylindrique (121) qui est munie au niveau d'une surface extérieure d'au moins deux gorges annulaires de circulation de fluide (123) espacées longitudinalement les unes des autres, chaque gorge de circulation de fluide présentant au moins un orifice de sortie (125) débouchant radialement à l'intérieur de la partie cylindrique du distributeur de fluide ;
un support d'arrivée de fluide (110) solidaire d'une partie fixe du turbopropulseur et comportant une partie cylindrique (111) qui est disposée autour de la partie cylindrique du distributeur de fluide en lui étant coaxiale et qui est munie d'au moins deux passages distincts de fluide (113) s'ouvrant vers des tubes d'arrivée de fluide (44) et débouchant chacun radialement à l'intérieur de la partie cylindrique du support dans l'une des gorges de circulation de fluide du distributeur ; et
une baignoire (130) solidaire en rotation du distributeur de fluide et comportant une partie cylindrique (131) qui est disposée à l'intérieur de la partie cylindrique du distributeur en lui étant coaxiale et qui est munie au niveau d'une surface extérieure d'au moins deux canaux longitudinaux d'écoulement de fluide (132) alimentés chacun en fluide par l'un des orifices de sortie du distributeur de fluide, chaque canal d'écoulement de fluide débouchant à une extrémité longitudinale vers une chambre (40a, 42a) d'un vérin de commande (40, 42), la partie cylindrique du distributeur de fluide se prolongeant à l'une de ses extrémités longitudinales par une partie radiale (122) munie d'au moins deux conduits (126) pour le passage de fluide, chaque conduit de passage de fluide s'ouvrant dans un canal d'écoulement de fluide de la baignoire et débouchant vers une chambre de vérin de commande.

2. Turbopropulseur selon la revendication 1, comprenant en outre un répartiteur de fluide (140) comportant une partie cylindrique (141) intercalée radialement entre les parties cylindriques respectives du distributeur de fluide et du support d'arrivée de fluide en leur étant coaxiale.

3. Turbopropulseur selon la revendication 2, dans lequel la partie cylindrique du répartiteur de fluide comprend, pour chaque gorge de circulation de fluide du distributeur, une pluralité d'orifices (142) régulièrement répartis sur une surface extérieure.

4. Turbopropulseur selon l'une quelconque des revendications 1 à 3, dans lequel la partie cylindrique du support d'arrivée de fluide se prolonge à l'une de ses extrémités longitudinales par une partie radiale (112) destinée à être fixée sur une partie fixe du turbopropulseur.

5. Turbopropulseur selon l'une quelconque des revendications 1 à 4, comportant en outre des paliers à roulement (150) disposés entre le distributeur de fluide et le support d'arrivée de fluide.

6. Turbopropulseur selon l'une quelconque des revendications 1 à 5, dans lequel les passages de fluide du support d'arrivée de fluide sont régulièrement espacés les uns des autres.

7. Turbopropulseur selon l'une quelconque des revendications 1 à 6, dans lequel les gorges de circulation de fluide du distributeur de fluide sont délimitées longitudinalement les unes des autres par au moins trois joints annulaires (124) disposés sur la surface extérieure de la partie cylindrique du distributeur et faisant saillies radialement vers l'extérieur de celle-ci.

8. Turbopropulseur selon l'une quelconque des revendications 1 à 7, dans lequel le rotor de la turbine de puissance entraîne en rotation les ensembles de pales de soufflante par l'intermédiaire d'un train épicycloïdal (32) formant réducteur.

## Patentansprüche

1. Turboprop-Triebwerk mit Doppelpropeller, umfassend eine erste und eine zweite Anordnung (26a, 26b) von Gebläseschaufeln mit einstellbarer Ausrichtung, die über einen Rotor einer Leistungsturbine drehangetrieben werden, zwei Hydraulikzylinder (40, 42) für die Steuerung der Ausrichtung der Gebläseschaufeln, die um eine Längsachse des Turboprop-Triebwerks angeordnet sind, und eine Vorrichtung zur Fluidversorgung (100) der Zylinder, **dadurch gekennzeichnet, dass** die Fluidversorgungsvorrichtung umfasst:
einen Fluidverteiler (120), der mit einem Rotor des Turboprop-Triebwerks drehfest verbunden ist und der einen zylindrischen Teil (121) umfasst, welcher im Bereich einer Außenfläche mit wenigstens zwei ringförmigen Fluidzirkulationsnuten (123), welche längs voneinander beabstandet sind, versehen ist, wobei eine jede Fluidzirkulationsnut wenigstens eine Austrittsöffnung (125) aufweist, die radial innerhalb des zylindrischen Teils des Fluidverteilers ausmündet,
einen Fluidzuführungshalter (110), der mit einem festen Teil des Turboprop-Triebwerks fest verbunden ist und der einen zylindrischen Teil (111) umfasst, welcher um den zylindrischen Teil des Fluidverteilers, koaxial zu diesem, herum angeordnet ist und welcher mit wenigstens zwei getrennten Fluiddurchlässen (113) versehen ist, die sich in Richtung von Fluidzuführungsrohren (44) öffnen und jeweils radial innerhalb des zylindrischen Teils des Trägers in einer der Fluidzirkulationsnuten des Verteilers ausmünden, und
eine Wanne (130), die mit dem Fluidverteiler drehfest verbunden ist und einen zylindrischen Teil (131) umfasst, welcher innerhalb des zylindrischen Teils des Verteilers, koaxial zu diesem, angeordnet ist und der im Bereich einer Außenfläche mit wenigstens zwei Längskanälen für die Fluidströmung (132) versehen ist, die jeweils über eine der Austrittsöffnungen des Fluidverteilers mit Fluid beaufschlagt werden, wobei ein jeder Fluidströmungskanal an einem Längsende in Richtung einer Kammer (40a, 42a) eines Steuerzylinders (40, 42) ausmündet, wobei der zylindrische Teil des Fluidverteilers an einem seiner Längsenden durch einen radialen Teil (122), welcher mit wenigstens zwei Leitungen (126) für den Fluiddurchgang versehen ist, fortgesetzt ist, wobei eine jede Fluiddurchgangsleitung sich in einen Fluidströmungskanal der Wanne öffnet und in Richtung einer Steuerzylinderkammer ausmündet.

2. Turboprop-Triebwerk nach Anspruch 1, ferner umfassend einen Fluidaufteiler (140), der einen zylindrischen Teil (141) aufweist, welcher zwischen den jeweiligen zylindrischen Teilen des Fluidverteilers und des Fluidzuführungshalters, koaxial zu diesen, radial eingefügt ist.

3. Turboprop-Triebwerk nach Anspruch 2, bei dem der zylindrische Teil des Fluidaufteilers für jede Fluidzirkulationsnut des Verteilers eine Vielzahl von Öffnungen (142), welche über eine Außenfläche gleichmäßig verteilt sind, umfasst.

4. Turboprop-Triebwerk nach einem der Ansprüche 1 bis 3, bei dem der zylindrische Teil des Fluidzuführungshalters sich an einem seiner Längsenden durch einen radialen Teil (112) fortsetzt, welcher dazu bestimmt ist, an einem festen Teil des Turboprop-Triebwerks befestigt zu werden.

5. Turboprop-Triebwerk nach einem der Ansprüche 1 bis 4, ferner umfassend Wälzlager (150), die zwischen dem Fluidverteiler und dem Fluidzuführungshalter angeordnet sind.

6. Turboprop-Triebwerk nach einem der Ansprüche 1 bis 5, bei dem die Fluiddurchlässe des Fluidzuführungshalters gleichmäßig voneinander beabstandet sind.

7. Turboprop-Triebwerk nach einem der Ansprüche 1 bis 6, bei dem die Fluidzirkulationsnuten des Fluidverteilers durch wenigstens drei Dichtringe (124), welche auf der Außenfläche des zylindrischen Teils des Verteilers angeordnet sind und radial zu dessen Außenseite hin vorspringen, längs voneinander abgegrenzt sind.

8. Turboprop-Triebwerk nach einem der Ansprüche 1 bis 7, bei dem der Rotor der Leistungsturbine die Gebläseschaufelanordnungen mittels eines ein Untersetzungsgetriebe bildenden Planetengetriebes (32) drehantreibt.

## Claims

1. A two-propeller turboprop having first and second sets (26a, 26b) of adjustable-pitch fan blades driven in rotation by a rotor of a power turbine, two hydraulic actuators (40, 42) for controlling the pitch of the fan blades and centered on a longitudinal axis of the turboprop, and a device (100) for feeding fluid to the hydraulic actuators, said device comprising:
a fluid manifold (120) constrained to rotate with a rotor of the turboprop and comprising a cylindrical portion (121) that is provided on an outside surface with at least two annular fluid-circulation grooves (123) that are longitudinally spaced apart, each fluid-circulation groove presenting at least one outlet orifice (125) opening out radially to the inside of the cylindrical portion of the fluid manifold;
a fluid-admission support (110) secured to a stationary portion of the turboprop and comprising a cylindrical portion (111) that is arranged around the cylindrical portion of the fluid manifold, being coaxial therewith and provided with at least two distinct fluid passages (113) opening out to respective fluid-admission tubes (44) and each leading radially to the inside of the cylindrical portion of the support in a respective one of the fluid-circulation grooves of the manifold; and
a tub (130) constrained to rotate with the fluid manifold and comprising a central portion (131) that is arranged inside the cylindrical portion of the manifold, being coaxial therewith, and provided on an outside surface with at least two longitudinal fluid-flow channels (132) each fed with fluid via a respective one of the outlet orifices of the fluid manifold, each fluid-flow channel having a longitudinal end leading to a chamber (40a, 42a) of a control actuator (40, 42), the cylindrical portion of the fluid manifold is extended at one of its longitudinal ends by a radial portion (122) provided with at least two ducts (126) for passing fluid, each fluid-passing duct opening into a fluid-flow channel of the tub and leading to a control actuator chamber.

2. A turboprop according to claim 1, further comprising a fluid distributor (140) comprising a cylindrical portion (141) interposed radially between the respective cylindrical portions of the fluid manifold and of the fluid-admission support, being coaxial therewith.

3. A turboprop according to claim 2, wherein the cylindrical portion of the fluid distributor includes, for each fluid-circulation groove of the manifold, a plurality of orifices (142) that are regularly distributed on an outside surface.

4. A turboprop according to any one of claims 1 to 3, wherein the cylindrical portion of the fluid-admission support is extended at one of its longitudinal ends by a radial portion (112) for fastening to a stationary portion of the turboprop.

5. A turboprop according to any one of claims 1 to 4, further comprising ball bearings (150) arranged between the fluid manifold and the fluid-admission support.

6. A turboprop according to any one of claims 1 to 5, wherein the fluid passages of the fluid-admission support are regularly spaced apart from one another.

7. A turboprop according to any one of claims 1 to 6, wherein the fluid-circulation grooves of the fluid manifold are defined longitudinally relative to one another by at least three annular gaskets (124) arranged on the outside surface of the cylindrical portion of the manifold and projecting radially outwards therefrom.

8. A turboprop according to any one of claims 1 to 7, wherein the rotor of the power turbine drives rotation of the sets of fan blades via a step-down epicyclic gear train (32).
